# FASCICULE DE BREVET EUROPEEN

(11) **EP 0 876 735 B1**
(45) Date de publication et mention de la délivrance du brevet: **17.10.2001**
(21) Numéro de dépôt: 97901660.7
(22) Date de dépôt: 24.01.1997
(51) Int. Cl.: H04Q 7/32

(54) **TERMINAL VOIX-DONNEES POUR RESEAU TELEPHONIQUE RADIO**
SPRECH- UND DATENENDGERÄT FÜR FUNKTELEFONIENETZ
VOICE AND DATA TERMINAL FOR A RADIOTELEPHONE NETWORK

(30) Priorité: 26.01.1996 FR 9600931; 09.10.1996 FR 9612294
(43) Date de publication de la demande: 11.11.1998
(73) Titulaire: SAGEM SA, 75116 Paris (FR)
(72) Inventeur: ALOS, Raphael, F-95520 Osny (FR); PORATO, Marc, F-60240 Loconville (FR); DIMECH, Jean-Marc, F-60240 Chaumont-en-Vexin (FR); SYKES, Francis, F-75014 Paris (FR)
(74) Mandataire: Bloch, Gérard
(86) Numéro de dépôt international: FR9700136
(87) Numéro de publication internationale: WO9727714

(56) Documents cités:
- EP-A- 0 693 860
- WO-A-95/07595
- DE-A- 4 020 375
- GB-A- 2 290 007
- DATA COMMUNICATIONS, vol. 24, no. 12, septembre 1995, NEW YORK, US, pages 37-38, XP000527748 TAYLOR K: "GOING WIRELESS: CELLULAR PHONE MELDED WITH MODEM"
- MOTOROLA TECHNICAL DEVELOPMENTS., vol. 20, octobre 1993, SCHAUMBURG, ILLINOIS, US, pages 110-111, XP000403841 HUI W S ET AL: "CT2 BASE AND HANDSET WITH BUILD-IN MODEM"

## Description

Les réseaux téléphoniques sont de plus en plus utilisés pour transmettre des données car ils offrent une grande facilité d'accès. Pour raccorder un appareil de transmission de données, comme un ordinateur personnel (PC), à un réseau téléphonique, on le raccorde par un adaptateur de connexion à une liaison téléphonique. Cet adaptateur comporte un modem qui assure une conversion des signaux émis par le PC, afin qu'ils présentent le niveau et le type de modulation voulus pour leur transmission à travers le réseau, et la conversion inverse pour les signaux reçus. Comme la liaison téléphonique ne permet en général qu'une seule communication, un aiguilleur à deux voies permet de sélectionner un combiné téléphonique associé ou le modem.

Pour établir une communication, le PC appelant commande, à travers l'adaptateur, la commutation de l'aiguilleur sur sa voie et émet des commandes de numérotation téléphonique, ces commandes provenant du clavier du PC ou bien étant engendrées par un logiciel du PC. Ensuite, la communication téléphonique étant établit, l'échange de données s'effectue à travers l'adaptateur, qui assure aussi et éventuellement une adaptation logique, c'est-à-dire effectue une conversion de protocole entre les signaux et entrée/sortie du PC et ceux transmis à travers le réseau.

Dans le cas du problème que s'est posé la demanderesse, et qui ne doit en rien limiter la portée de la présente demande, il s'agissait du réseau téléphonique GSM et c'était un terminal téléphonique GSM qui assurait l'aiguillage vers un adaptateur à modem GSM de raccordement d'un PC à fonction de communication.

Un tel adaptateur est cependant très coûteux.

EP-A-697 860 enseigne des moyens de terminaison de relation homme-machine (afficheur-écran) avec une adaptation électrique à leur interface. Il s'agit de la couche OSI de niveau 1, d'adaptation physique de signaux et non de l'adaptation logique de données numériques évoquée ci-dessus.

Ainsi, l'invention concerne un terminal de radio-téléphonie comportant des moyens de connexion pour relier, à un réseau téléphonique radio numérique, un combiné téléphonique, des moyens d'adaptation de données agencés pour être reliés à un appareil de transmission de données et une unité centrale de gestion des communications téléphoniques vocales et des communications desdites données, caractérisé par le fait que l'unité centrale est agencée pour, en temps partagé, gérer lesdites communications téléphoniques vocales ainsi que pour procéder à ladite adaptation des données numériques.

L'adjonction des fonctions relatives aux données paraît a priori économiquement irrationnelle. En effet, elle consiste à ajouter des fonctions de transmission de données, d'adaptation, dans le terminal dont la fonction de base est la téléphonie, sans savoir si le surcoût que cela engendre trouvera sa contrepartie dans une utilisation effective. En d'autres termes, l'approche paraissant rationnelle, et qui avait jusqu'alors été suivie, était d'implanter une carte d'adaptation dans l'appareil de transmission de données. L'un des mérites de la demanderesse est donc d'avoir songé à un terminal radio offrant, économiquement, en définitive, un service de raccordement direct au réseau. En effet, la fonction d'adaptation, étant intégrée dans l'unité centrale, ne nécessite pas de boîtier spécifique car elle utilise en temps partagé tout ou partie de celle-ci. En bref, l'examen approfondi de la solution a priori irrationnelle a montré à la demanderesse qu'en fait cette voie de recherche aboutissait à la solution économiquement la meilleure.

De façon avantageuse, l'unité centrale est agencée pour gérer les données et les moyens de transmission de données sont intégrés au terminal.

Celui-ci peut ainsi disposer de la totalité des fonctions requises pour traiter des applications intéressantes, c'est-à-dire, d'une part, établir une liaison de transmission de données avec un serveur ou terminal informatique distant et, d'autre part, échanger ensuite avec celui-ci et interpréter des données relatives à l'application concernée. Bref, dans ce cas, le terminal intègre les fonctions d'un terminal informatique.

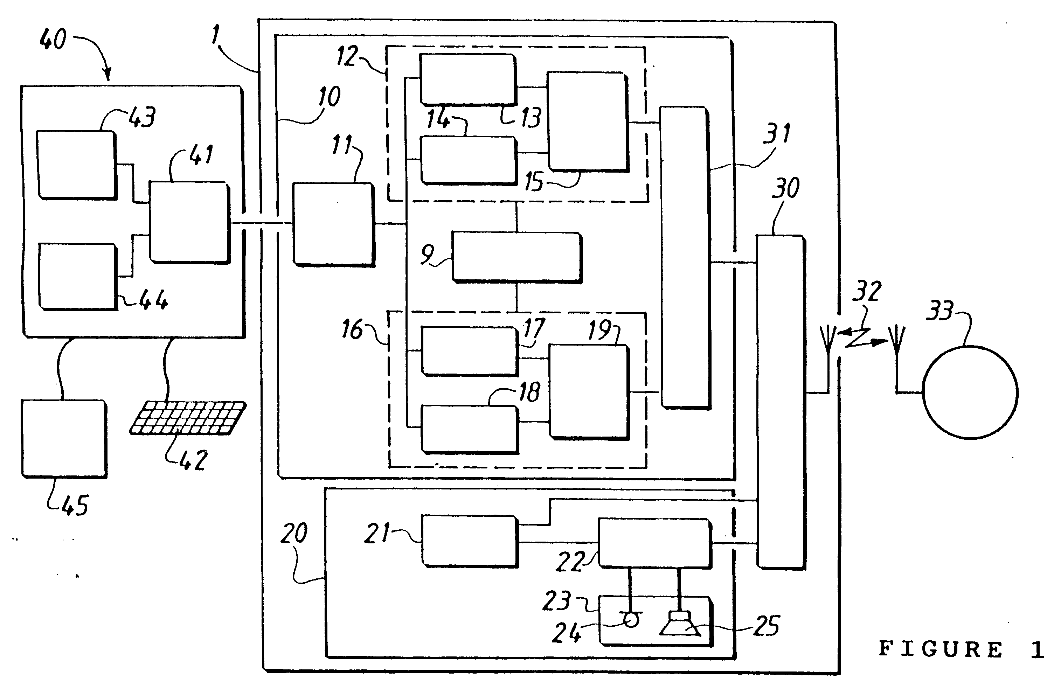

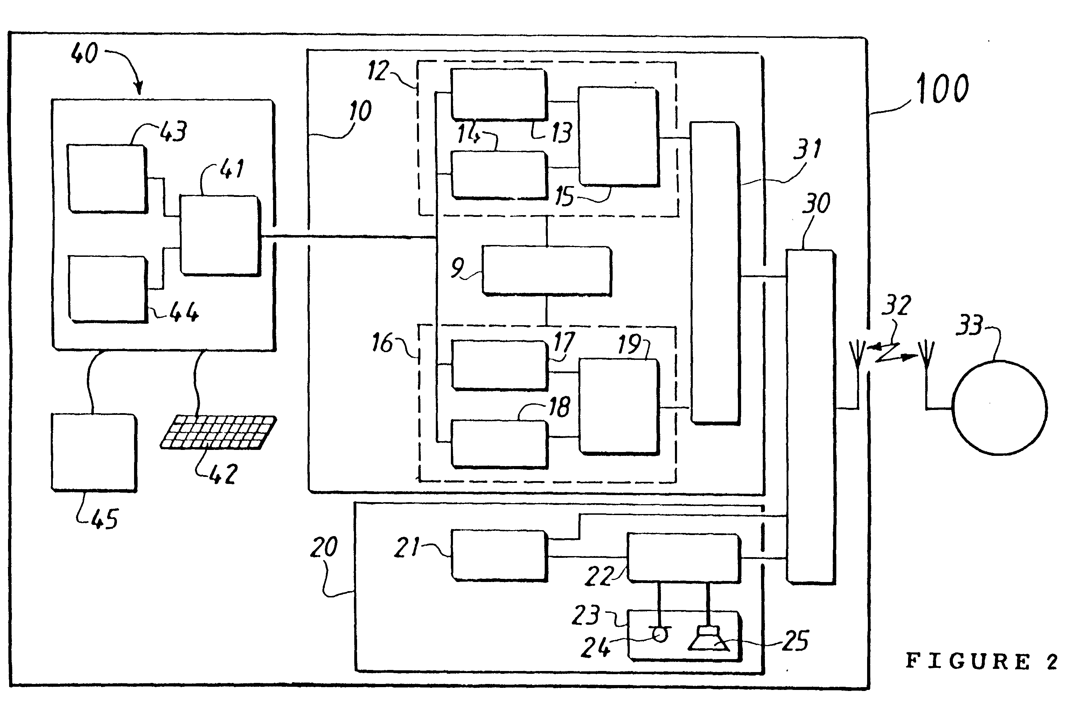

L'invention sera mieux comprise à l'aide de la description suivante de deux variantes de réalisation préférées du terminal voix-données de l'invention, en référence au dessin annexé, sur lequel les figures 1 et 2 représentent schématiquement, et respectivement, les deux variantes de réalisation.

On comprendra que les schémas ont un but didactique, c'est-à-dire que les fonctions décrites sont pour certaines effectuées par un circuit unique en partage de temps. En d'autres termes, les blocs représentent alors des fonctions et non des circuits réservés à ces fonctions, comme cela est précisé plus loin.

Sur la figure 1 est représenté un terminal 1 relié à un appareil 40 de transmission de données, ici un ordinateur personnel (PC). Le terminal 1 est un poste téléphonique, ici pour réseau téléphonique radio, relié par une liaison radio 32 au réseau GSM 33. Le terminal 1 comporte un circuit radio 30 d'interface GSM, un ensemble 20 de téléphonie vocale et un ensemble 10 d'adaptation de données. Le circuit d'interface 30 permet de relier la liaison 32 aux ensembles 10 et 20, ici un seul à la fois. L'ensemble d'adaptation 10 est aussi relié au PC 40.

Le circuit d'interface 30 comporte un émetteur et un récepteur radio classiques accordés sur une fréquence porteuse propre à chacun et dont le signal de porteuse est modulé pour transmettre, dans un canal radio, un signal vocal ou les signaux d'un modem. La liaison 32 peut être connectée à cet effet, ou aiguillée, par le circuit d'interface radio 30 à l'ensemble 10 ou à l'ensemble 20.

L'ensemble 10 d'adaptation de données comporte un circuit 11 d'interface V24, relié d'un côté au PC 40 et, de l'autre côté, à un ensemble 12 de traitement de signalisation et à un ensemble 16 de traitement de données, représentés limités par un cadre en ligne en pointillés. Une unité centrale 9 est reliée aux ensembles 12 et 16.

L'ensemble 12 comporte, reliés au circuit d'interface 11, une fonction 13 traitant des signalisations téléphoniques classiques (mode de circuit) et une fonction 14 traitant des signalisations pour des serveurs de données raccordés à un réseau de transmission de données par paquets. Plus précisément, il s'agit dans cet exemple de serveurs pour terminaux de la marque protégée MINITEL. Ces serveurs sont raccordés à un réseau numérique spécialisé de transmission par paquets X25, auquel on peut aussi accéder à partir des réseaux de téléphonie commutée RTC et GSM. Une fonction de signalisation GSM 15 relie les fonctions 13, 14 à un modem 31 de l'ensemble 20, relié au circuit radio 30.

L'ensemble 16 de traitement des données a une structure similaire à celle de l'ensemble 12, avec, reliés au circuit d'interface 11, une fonction 17 de traitement de données de signalisation de type téléphonique et une fonction 18 de traitement des données de signalisation de type MINITEL, reliées au modem 31 par une fonction 19 d'aiguillage.

De façon classique, l'ensemble téléphonique 20 comporte une unité centrale 21 à microprocesseur et un circuit 22 d'interface de combiné téléphonique, reliés au circuit radio 30. Un combiné téléphonique 23, comportant un microphone 24 et écouteur 25, est relié au circuit d'interface 22.

Le PC 40 comporte un circuit 41 d'interface V24 pour respectivement relier, par le circuit 11, un circuit 43 de traitement de données téléinformatiques aux fonctions 13, 17 et 18. Le PC 40 comporte, de façon classique, des organes d'entrée/sortie pour relations homme machine et en particulier ici un clavier 42 et un écran 45.

Le fonctionnement du terminal 1 et du PC 40 va maintenant être décrit.

L'établissement d'une communication vocale en départ au moyen de l'ensemble 20 est effectué par l'envoi vers le réseau GSM 33, sous la commande de l'unité centrale 21, de signalisations correspondant au numéro composé par l'utilisateur au moyen d'un clavier du terminal 1. Les moyens classiques nécessaires à cet effet n'ont pas été représentés. Le circuit d'interface 22 polarise le microphone 24 et assure une fonction d'adaptateur de modulation pour effectuer, dans les deux sens, une adaptation entre les signaux vocaux analogiques et la modulation prévue pour la transmission radio, ici la modulation type GMSK.

Pour une transmission de données entre le PC 40 et un autre appareil de transmission de données relié au réseau GSM 33, directement ou à travers un autre réseau, l'ensemble 10 assure l'adaptation des données échangées entre les deux appareils, afin qu'elles puissent être transmises à travers le réseau GSM 33.

Dans un premier cas, d'établissement d'une liaison de données en mode téléphonique ou "circuit" vers un appareil relié au réseau GSM 33, directement ou à travers le réseau analogique RTC, un utilisateur active le circuit 43 à partir du clavier 42. Le circuit 43 comporte une mémoire de logiciel qui est adressée pour émettre, par le circuit 41, le numéro de téléphone de l'appareil appelé. Le numéro émis par le circuit 41 est reçu par la fonction 13 à travers le circuit 11. Cet aiguillage vers la fonction 13 est en fait effectué par l'unité centrale 9, qui analyse la signalisation reçue et l'aiguille vers la fonction 13 ou la fonction 14 selon sa nature : téléphonique, mode circuit, ou de type MINITEL. Ce numéro est transmis à la fonction 15 qui gère l'établissement de la communication GSM, et en particulier assure les fonctions de la couche de niveau 3 dans les sept couches de la classification internationale OSI. Ainsi, la fonction 15 échange, par le modem 31, une séquence de messages de signalisation avec le réseau GSM 33 et adapte cette séquence en fonction des messages de signalisation reçus de celui-ci en réponse à chaque message, afin de gérer l'établissement et la rupture d'une communication. La fonction 15 commande aussi le modem 31 de connexion au circuit 30, en ce sens qu'elle peut le configurer selon des paramètres déterminés, comme par exemple sa vitesse et ses fréquences de modulation.

Une fois la communication établie, à travers le réseau 33, avec l'appareil appelé, la transmission des données entre eux fait intervenir l'ensemble 16. La fonction 17 assure en particulier l'adaptation des données entre l'interface V24 et le réseau GSM 33 en ce qui concerne leur format de présentation. Il s'agit de la fonction RA1' de la recommandation ETSI 04.21, concernant l'assemblage/désassemblage de trames V110 de 36 ou 60 bits, avec 24 ou 48 bits utiles et 12 bits de service, à partir/vers des blocs de 64 bits utiles. L'interface V24 transmet à 2,4, 4,8 ou 9,6 kb/s, tandis que, côté reseau GSM 33, les bits sont échangés à un débit de 3,6, 6 ou 12 kb/s. La fonction 18 réalise la fonction RA0 de la recommandation 04.21, c'est-à-dire l'adaptation de débit, entre données synchrones et données asynchrones, vers le débit supérieur 2ⁿ x 600 bits/s le plus proche (n : entier positif), par bourrage ou suppression de bits "stop". Une liaison directe entre les fonctions 17 et 18 permet leur coopération pour traiter un même bloc de données. L'unité centrale 9 peut en particulier commander l'ensemble 16 à partir de commandes provenant de l'ensemble 12 et fournir des informations en retour.

En émission de données sur le réseau GSM 33, la fonction 17 lit les données sur l'interface 11 V24 et les place dans un tampon mémoire. De manière cyclique, ces données sont codées au format V110 et par exemple 6 octets deviennent 9 octets par adjonction de bits de start et de stop. Par exemple, à la vitesse 2400 bits/s, la même séquence est appliquée sous forme de boucle logicielle tous les 45 octets. En réception de blocs de données du réseau GSM 33, la fonction 18 retire les bits d'état pour constituer un flot continu de données utiles. On recherche un bit de start et/ou un bit de stop. Si la recherche est positive, on indique qu'une information de donnée a été détectée. Lorsque le bloc a été consommé, on attend la réception du bloc suivant pour réaliser le même traitement. Des tampons intermédiaires sont utilisés pour le traitement des bas débits.

Dans le cas d'établissement d'un appel vers un serveur MINITEL, le principe d'établissement de la communication est le même que ci-dessus mais fait intervenir les circuit et fonctions 44, 14, 17 et 18.

Dans cet exemple, l'ensemble 10 sert d'adaptation pour la transmission des données à travers le réseau GSM 33. En d'autres termes, le terminal 1, le réseau 33 et un autre terminal semblable raccordant l'autre appareil de transmission de données sont transparents vis-à-vis de l'application. La transmission elle-même peut ne pas être transparente, c'est-à-dire comporter en particulier une détection et correction d'erreurs.

Cependant, il aurait pu être prévu que l'ensemble d'adaptation 10 comporte des fonctions relatives à des couches OSI dépassant le niveau 3, et en particulier traite au moins une partie de l'application relative aux données transmises. On peut en particulier y intégrer des fonctions de télécopie, ou de télétex, c'est-à-dire y réaliser un coupleur télécopie gérant le protocole d'échange de signalisations et de données entre télécopieurs ou appareils ayant cette fonction. On dispose alors d'un télécopieur réparti, à partir d'un scanner et d'une imprimante reliés au PC 40 et échangeant les données d'image avec l'ensemble d'adaptation 10.

Comme indiqué plus haut, les fonctions décrites sont pour certaines effectuées par un circuit unique en partage de temps. Ceci est en particulier vrai pour l'unité centrale 9 et l'unité centrale 21, qui sont réalisées à partir d'une unité centrale commune, gérant donc les communications téléphoniques vocales ainsi que les données traversant l'ensemble d'adaptation 10. Le circuit 22 et le modem 31 peuvent être un même circuit de modulation/ démodulation, associé au circuit radio 30, pour des signaux analogiques, vocaux, ou des signaux numériques. En particulier, la reconnaissance/génération de signaux de modulation numérique du modem 31 peut être effectuée par l'unité centrale commune ou par un processeur de signaux. De même encore, les fonctions de reconnaissance de signalisation provenant du PC 40, effectuées par l'ensemble 12 et les fonctions de l'ensemble 16 peuvent être traitées par l'unité centrale commune. Ainsi, une unité centrale commune voix/données peut traiter en partage de temps, sous la commande d'un logiciel adapté à cet effet, les fonctions téléphoniques et celles décrites pour l'ensemble 10. En bref, l'ensemble 10 ne requiert que du temps d'unité centrale, et aucun circuit supplémentaire.

La figure 2 illustre une variante de réalisation dans laquelle le terminal, portant alors la référence 100, traite des fonctions relatives à des couches OSI dépassant le niveau 3, pour en particulier atteindre la couche application, c'est-à-dire que les moyens de transmission de données (40) sont intégrés au terminal 100.

Les fonctions des éléments de la figure 1, qui conservent ici leur référence, sont inchangées. Les moyens de relation homme-machine 42 et 45 peuvent être raccordés au terminal 100 par cordon amovible ou, comme représenté, y être intégrés. Le circuit d'interface 11 n'a plus de raison d'être.

La représentation ci-dessus par blocs fonctionnels répond à un souci de clarté de l'exposé. En pratique, on utilisera de préférence une unité centrale unique, comportant un microprocesseur (9), des mémoires de travail pour ranger les données et des mémoires avec divers programmes pour traiter les couches OSI 2 à 7. En pareil cas, on peut alors considérer que cette. unité centrale constitue des moyens d'adaptation de données traitant les fonctions d'établissement et de rupture d'une liaison sur le réseau particulier considéré, ici radio GSM, (couches 2 et 3), moyens d'adaptation agencés pour traiter une ou plusieurs applications (couches 4 à 7), les fonctions application étant par essence indépendantes de la nature du réseau de transmission, radio ou filaire.

Un exemple d'application concernant la transmission de messages radio courts appelés SMS, est décrit ci-après.

Il s'agit d'émettre, depuis le terminal 100, le texte du message et l'adresse d'un abonné destinataire via un serveur de messagerie vidéotex, du réseau GSM, où il est traité. De façon classique, le destinataire est averti de l'arrivée du message par le service SMS.

Le séquencement des opérations du protocole d'émission depuis le terminal 100, géré par les mémoires de programme ci-dessus, est le suivant.
L'utilisateur du terminal 100 active le programme d'émission de messages courts. La fonctionnalité du modem 31 est alors configurée selon des paramètres enregistrés dans la mémoire de programme, déterminant entre autres la vitesse, la parité et la nature analogique ou numérique des signaux transmis du côté réseau.

Un gestionnaire local de serveurs ayant fourni une page d'accueil, l'application se synchronise dessus pour envoyer une chaîne de caractères comprenant le nom du serveur. L'application se synchronise sur une autre chaîne de caractères "numéro de téléphone du correspondant appelé, composée (42) par l'utilisateur, et l'affiche à l'écran (45). Mais cette dernière chaîne de caractères peut parfaitement être pré-enregistrée.

La chaîne des caractères saisis au clavier 42 est ensuite émise vers le serveur, avec conversion éventuelle de certains caractères.

L'utilisateur ayant composé au clavier 42 le message court, et l'ayant mémorisé en mémoire de travail, l'application se synchronise ensuite sur la réception de la chaîne de caractères "texte à envoyer" provenant du serveur et elle affiche sur l'écran 45 : "Sélectionner message court en mémoire puis valider". Tous ces caractères et messages peuvent aussi être pré-enregistrés.

Après filtrage et conversion, la chaîne de caractères du message saisi et provisoirement mémorisé localement est émise vers le serveur, après validation par l'utilisateur.

L'application se synchronise sur la chaîne de caractères "message envoyé" et affiche à l'écran un message de succès, ce qui met fin à la séquence d'émission du message court.

La mémoire de programmes peut contenir plusieurs applications et peut être modifiée à partir du clavier 42.

## Revendications

1. Terminal de radio-téléphonie (1) comportant des moyens de connexion (30, 31 ; 22) pour relier, à un réseau téléphonique radio numérique (33), un combiné téléphonique (23), des moyens d'adaptation de données (10) agencés pour être reliés à un appareil de transmission de données (40) et une unité centrale (9, 12, 16, 21, 31) de gestion des communications téléphoniques vocales et des communications desdites données, **caractérisé par le fait que** l'unité centrale (9, 12, 16, 21, 31) est agencée pour, en temps partagé, gérer lesdites communications téléphoniques vocales ainsi que pour procéder à ladite adaptation des données numériques.

2. Terminal selon la revendication 1, dans lequel les moyens d'adaptation (10) sont agencés pour commander (13, 14) des moyens (15) d'établissement d'une communication téléphonique.

3. Terminal selon l'une des revendications 1 et 2, dans lequel les moyens d'adaptation (10) sont agencés pour gérer (14) une transmission de données par paquets.

4. Terminal selon l'une des revendications 1 à 3, dans lequel l'unité centrale (9, 12, 16, 21, 31) est agencée pour gérer les données.

5. Terminal selon l'une des revendications 1 à 4, dans lequel les moyens de transmission de données sont intégrés au terminal (100).

6. Terminal selon la revendication 5, dans lequel les moyens d'adaptation (10) sont agencés pour gérer un protocole de télécopie.

7. Terminal selon l'une des revendications 5 et 6, dans lequel les moyens d'adaptation (10) sont agencés pour gérer un protocole télétex.

8. Terminal selon l'une des revendications 5 à 7, dans lequel les moyens de transmission de données sont agencés pour transmettre des messages courts.

## Patentansprüche

1. Datenendgerät (1) für Funk Telefonie mit Anschlussmitteln (30, 31; 22) zum Verbinden eines Handapparats (23) mit einem Digitalfunktel efonnetz (33), Mitteln (10) zur Anpassung von Daten, die vorgesehen sind, um an einen Datenübertragungsapparat (40) und eine Zentraleinheit (9, 12, 16, 21, 31) zur Verwaltung von sprachlichem Telefonverkehr und dem Verkehr dieser Daten angeschlossen zu werden, **dadurch gekennzeichnet, dass** die Zentraleinheit (9, 12, 16, 21, 31) vorgesehen ist, um im Teilnehmerbetrieb diesen sprachlichen Telefonverkehr zu verwalten sowie die Anpassung der digitalen Daten vorzunehmen.

2. Datenendgerät nach Anspruch 1, bei dem die Anpassungsmittel (10) vorgesehen sind, um die Mittel (15) zur Herstellung einer Telefonverbindung zu steuern (13, 14).

3. Datenendgerät nach einem der Ansprüche 1 und 2, bei dem die Anpassungsmittel (10) vorgesehen sind, um eine Paketdatenübertragung zu verwalten (14).

4. Datenendgerät nach einem der Ansprüche 1 bis 3, bei dem die Zentraleinheit (9, 12, 16, 21, 31) vorgesehen ist, um die Daten zu verwalten.

5. Datenendgerät nach einem der Ansprüche 1 bis 4, bei dem die Datenübertragungsmittel im Datenendgerät (100) integriert sind.

6. Datenendgerät nach Anspruch 5, bei dem die Anpassungsmittel (10) vorgesehen sind, um ein Faxprotokoll zu erzeugen.

7. Datenendgerät nach einem der Ansprüche 5 und 6, bei dem die Anpassungsmittel (10) vorgesehen sind, um ein Teletextprotokoll zu erzeugen.

8. Datenendgerät nach einem der Ansprüche 5 bis 7, bei dem die Datenübertragungsmittel vorgesehen sind, um Kurzmitteilungen zu übertragen.

## Claims

1. Radiotelephone terminal (1) comprising connection means (30, 31; 22) to connect, to a digital radiotelephone network (33), a telephone handset (23), data adaptation means (10) arranged to be connected to a data transmission device (40) and a central unit (9, 12, 16, 21, 31) for handling voice telephone communications and communications of said data, **characterised by** the fact that the central unit (9, 12, 16, 21, 31) is arranged to handle, in shared time, said vocal telephone communications as well as to proceed to said adaptation of the digital data.

2. Terminal according to claim 1, wherein the adaptation means (10) are arranged to control (13, 14) means (15) of establishing a telephone communication.

3. Terminal according to one of claims 1 and 2, wherein the adaptation means (10) are arranged to handle (14) a transmission of data in packets.

4. Terminal according to one of claims 1 to 3, wherein the central unit (9, 12, 16, 21, 31) is arranged to handle the data.

5. Terminal according to one of claims 1 to 4, wherein the data transmission means are integrated into the terminal (100).

6. Terminal according to claim 5, wherein the adaptation means (10) are arranged to handle a facsimile protocol.

7. Terminal according to one of claims 5 and 6, wherein the adaptation means (10) are arranged to handle a teletex protocol.

8. Terminal according to one of claims 5 to 7, wherein the data transmission means are arranged to transmit short messages.
